(19) Europäisches Patentamt
European Patent Office
Office européen des brevets

(11) Publication number: **0 127 915**
**B1**

# (12) EUROPEAN PATENT SPECIFICATION

(45) Date of publication of patent specification: **07.12.88**

(51) Int. Cl.⁴: **C 08 G 59/14,** C 08 G 59/18, C 09 D 3/58

(21) Application number: **84200700.7**

(22) Date of filing: **15.05.84**

## (54) Novel polyglycidyl ethers, their preparation and their use as thermosetting coating compositions.

(30) Priority: **03.06.83 GB 8315230**
**09.11.83 GB 8329881**
**28.02.84 GB 8405139**

(43) Date of publication of application:
**12.12.84 Bulletin 84/50**

(45) Publication of the grant of the patent:
**07.12.88 Bulletin 88/49**

(84) Designated Contracting States:
**BE CH DE FR GB IT LI NL**

(56) References cited:
**CH-A- 443 342**
**DE-A-2 722 974**
**FR-A-1 275 075**
**FR-A-2 090 180**
**US-A-2 908 664**
**US-A-3 252 850**
**US-A-3 424 817**
**US-A-4 066 525**
**US-A-4 246 089**

**PATENT ABSTRACTS OF JAPAN, vol. 4, no. 173 (C-32)655r, 29 Nov 1980**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Kooymans, Petrus Gerardus**
**Badhuisweg 3**
**NL-1031 CM Amsterdam (NL)**
Inventor: **Stachowiak, Stephen Anthony**
**Badhuisweg 3**
**NL-1031 CM Amsterdam (NL)**
Inventor: **Bekooij, Jurrianus**
**Badhuisweg 3**
**NL-1031 CM Amsterdam (NL)**
Inventor: **Raudenbusch, Werner Theodor**
**Badhuisweg 3**
**NL-1031 CM Amsterdam (NL)**

(74) Representative: **Aalbers, Onno et al**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 127 915 B1**

## Description

This invention relates to novel polyglycidyl ethers, a process for their preparation and their use as thermosetting coating compositions, particularly for use in electrodeposition coating of articles.

US Patent No. 4,066,525 discloses the preparation of resinous binder materials for electrodeposition coatings containing substantially no residual epoxy groups by reaction of bisphenol-A-derived diglycidyl ether with amino alcohol, e.g. diethanolamine, or with a mixture of an amino alcohol and a alkylphenol, e.g. nonylphenol. These known products have the disadvantage that their rupture voltage is too close to the voltage at which the coating is to be applied to the metal-substrate by electrodeposition. In commercial practice the application voltage is ideally set at around 100 to 130 V. As a result of the rupture voltage being too high, the deposited coatings risk to show an unacceptably high level of porosity due to gas-formation in the electrodeposited coating.

In addition, the known compositions, in being based on the concept of modifying epoxy resin products by building-in alkylphenol units to achieve adequate flow during electrodeposition, can only have the desired high level of built-in alkylphenol units at the detriment of adequate water-solubility.

The present invention sets out to provide modified epoxy compositions not having the disadvantages discussed herein above. As a first step towards achieving that objective, the invention provides novel starting materials as defined herein after. As a second step the invention provides a number of different processing steps to convert these novel starting materials into water-soluble electrocoating compositions.

The novel starting materials of the present invention are polyglycidyl ethers having on average n epoxy groups per molecule, where $1 < n \leq 2$, which comprises the reaction of a multifunctional polyglycidyl ether having on average x epoxy groups per molecule, where $x > 2$, with (x-n) mol of a non-halogenated monofunctional phenol per mol of the multifunctional polyglycidyl ether, said phenol or mixture thereof carrying substituents selected from $C_{1-16}$ alkyl, $C_{3-16}$ alkenyl, $C_{1-4}$ hydroxyalkyl, $C_{2-13}$ alkoxycarbonyl and $C_{1-16}$ alkoxy groups.

The multifunctional polyglycidyl ether may conveniently be a polyglycidyl ether prepared by reaction of a polyhydric phenol having a phenolic hydroxyl functionality greater than 2, with an epihalodrin, preferably epichlorohydrin, in the presence of a hydrogen halide acceptor, e.g. an alkali metal hydroxide.

Examples of suitable such polyhydric phenols are novolac resins of general formula

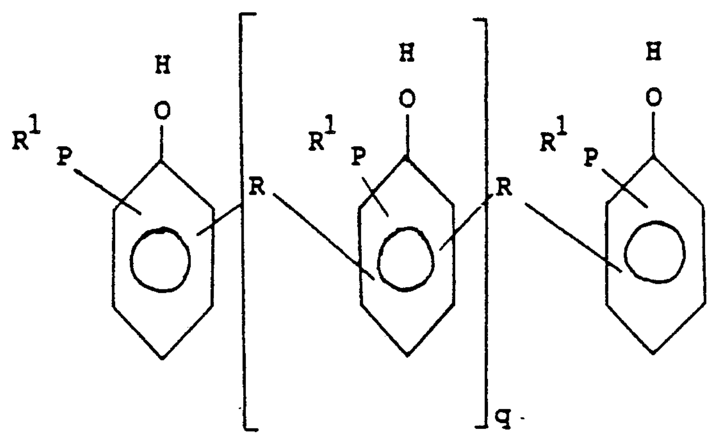

(I)

wherein R represents an alkylene, e.g. $CH_2$ group, $R^1$ represents an alkyl group, e.g. a methyl, *p*-t-butyl, octyl or nonyl group, q and p are numbers having average values $0 < q < 6$ and $0 < p < 2$, or of general formula

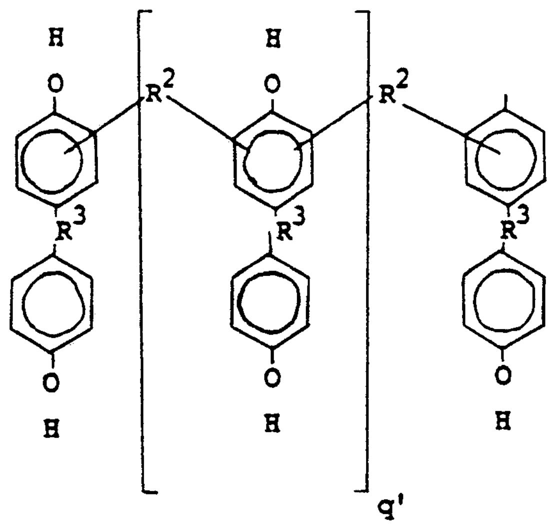

(II)

wherein $R^2$ represents an alkylene, e.g. $CH_2$ group, $R^3$ represents an alkylene, e.g. $CH_2$ or $C(CH_3)_2$ group, a carbonyl group, an oxygen or sulphur atom and q′ is a number having an average value in the range of from 0 to 2.

Other examples of suitable polyhydric polynuclear phenols are 1,1-2,2-tetra(4-hydroxyphenyl)ethane and the tetraphenol derived from diphenolic acid having the general formula

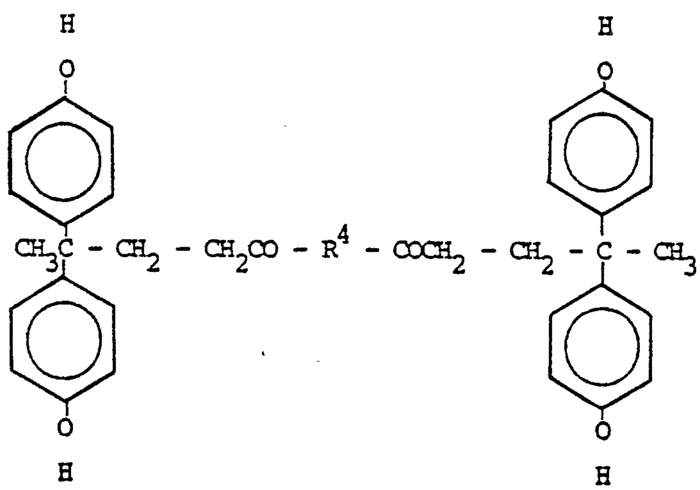

(III)

wherein $R^4$ represents the residue of a diol. Polyglycidyl ethers derived from polyhydric phenols of formulae I, II and III are known and are described, together with processes for their preparation, in, for example, US Patent 2,844,553, Dutch Patent Application 8100830, W. German Patent Application 2,656,867 and British Patent Application 2 001 991.

Preferably the multifunctional polyglycidyl ether is an epoxy novolac resin wherein x is greater than 2 and is in the range of from 2 to 6, and more preferably x is in the range of from 3 to 4.

Advantageously the epoxy novolac resin is derived from a novolac of formula I wherein R is $CH_2$, q is 1 to 2 and p is 0 to 1 or a bis-phenol novolac of formula II wherein $R^2$ is $CH_2$, $R^3$ is $C(CH_3)_2$ and q′ is 0.

Preferably n is in the range of from 1.3 to 2 and advantageously n may be in the range of from 1.4 to 1.7.

The monofunctional phenol may be a single phenol or a mixture of phenols. For example the phenol may conveniently be phenol optionally substituted by one or more of one or more substituents selected from $C_{1-16}$ alkyl, $C_{3-16}$ alkenyl, $C_{1-4}$ hydroxyalkyl, $C_{2-13}$ alkoxycarbonyl and $C_{1-16}$ alkoxy groups. Examples of such compounds include phenol, the cresols, salicyl alcohol, 2-allyl phenol, 2,4,6-triallyl phenol, dimethyl phenol, 4-hydroxymethyl-2,6-dimethyl phenol, 2-hydroxyphenethyl alcohol, 4-hydroxybenzyl alcohol and ethyl 4-hydroxybenzoate. Preferably the monofunctional phenol is phenol substituted in the para-position by a $C_{4-12}$ alkyl substituent. Examples of such alkyl substituents include n-, iso- and t-butyl, n- and iso-octyl, n- and iso-nonyl and n- and iso-dodecyl groups. Branched alkyl substituents are particularly suitable. P-iso-octyl phenol has been found to be a very suitable monofunctional phenol.

The invention also provides a process for preparing a polyglycidyl ether of the invention which process comprises reacting the multifunctional polyglycidyl ether with the monofunctional phenol at a temperature in the range of from 120 to 180°C in the presence of an acid or base catalyst.

Preferably reaction is at a temperature in the range of from 130 to 150°C.

The acid or base catalyst may be, for example, a tertiary amine, a quaternary ammonium or phosphonium salt or an alkali metal hydroxide or carbonate, or sulphuric acid.

The tertiary amine may be for example triethanolamine, benzyl dimethylamine or 2-dimethylamino-2-methyl-1-propanol. Quaternary ammonium salts, e.g. tertiary ammonium chloride, are preferred catalysts.

Tertiary amine catalysts are preferably used in amounts from 0.1 to 1%w of reactants and quaternary ammonium salts are preferably employed in amounts from 0.005 to 0.2%w of reactants.

The invention also includes uses of the polyglycidyl ethers of the invention. Those skilled in the art will appreciate that they may be used in applications which are conventional (known) uses of polyglycidyl ethers containing on average more than 1 but not more than 2 epoxy groups per molecule.

However, the polyglycidyl ethers of the invention have been found to be particularly useful in the preparation of water-thinnable curable binders for coatings. Accordingly the invention further provides a process for the preparation of a water-thinnable curable binder for coatings which comprises reacting a polyglycidyl ether of the invention in aqueous medium with an amino compound containing on average two amino-hydrogen atoms per molecule or an alkali metal salt of an amino acid. This reaction is preferably carried out at a temperature in the range of from 100 to 120°C.

If desired a quantity of a known liquid or solid polyglycidyl ether, such as a liquid or solid bisphenol-A-derived polyglycidyl ether, e.g. "EPIKOTE 828" (registered trade mark) having an epoxy molar mass of 182 to 194 g, or "EPIKOTE 1007" (registered trade mark) having an epoxy molar mass of 1550 to 2000 g, may be included with the polyglycidyl ether of the invention in the reaction in aqueous medium in the above process for the preparation of a water-thinnable curable binder for coatings.

2-Amino-2-methyl-1-propanol is the preferred amino compound, and use thereof gives rise to curable binders which, in neutralized form, are suitable for use in cathodic electrodeposition coating. Glycine, neutralized with for example potassium hydroxide, is a preferred amino acid, and use of amino acids gives rise to curable binders which are suitable for use in anodic electrodeposition. Accordingly, the invention also comprises an aqueous thermosetting coating composition comprising a binder (A) prepared as described in the preceding paragraphs and a crosslinking compound (B) in a weight ratio (A:B) of from 95:5 to 65:35, compound (B) having been combined with binder (A) before or after neutralization thereof.

It has further been found that water-thinnable curable binders (binders C) for coating with enhanced flexibility may be obtained from the novel polyglycidyl ethers of this invention. Thereto, the invention also provides a process for the preparation of a water-thinnable curable binder (binder C) for coatings which comprises reacting together in aqueous medium, a novel polyglycidyl ether in accordance with this invention, a polyglycidyl ether having an epoxy molar mass in the range of from 300 g to 1500 g and an amino compound containing on average two amino-hydrogen atoms per molecule, the weight ratio of the polyglycidyl ether to the diglycidyl ether being in the range 75:25 to 45:55 and the amino compound being included in an amount sufficient to provide 1 to 1.5 amino-hydrogen atoms per epoxy group from the polyglycidyl and diglycidyl ethers. This reaction in aqueous medium is preferably carried out at a temperature of from 100 to 120°C.

The diglycidyl ether is preferably a diglycidyl ether of a dihydric phenol, e.g. a bisphenol. Conveniently the diglycidyl ether is a diglycidyl ether of 2,2-bis(4-hydroxyphenyl)propane having an epoxy molar mass in the range 300 g to 15000 g. Preferably the diglycidyl ether has an epoxy molar mass in the range 400 g to 1100 g. Examples of very suitable polyglycidyl ethers of 2,2-bis-(4-hydroxyphenyl)propane include "EPIKOTE 1001" (registered trade mark) (epoxy molar mass 450 g to 500 g) and "EPIKOTE 3003" (registered trade mark) (epoxy molar mass 725 g to 825 g). The weight ratio of the novel polyglycidyl ether to the diglycidyl ether is preferably in the range 65:35 to 55:45. Very good results have been obtained when the ratio is about 60:40. The amino compound is preferably included in an amount sufficient to provide 1 to 1.2, more preferably 1 to 1.1, amino-hydrogen atoms per epoxy group. The most preferred amino compound is 2-amino-2-methyl-1-propanol.

The invention further provides an aqueous thermosetting coating composition comprising a binder (C) as described hereinbefore and a cross-linking compound (B) in a weight ratio C:B in the range from 95:5 to 65:35, preferably 90:10 to 70:30, more preferably 85:15 to 75:25, compound B having been combined with binder (C) before or after neutralization thereof.

It has further been found that water-thinnable curable binders (binders D) for coatings with enhanced flow and low porosity may be obtained from the novel polyglycidyl ethers of this invention. Thereto, the invention also provides a process for the preparation of an essentially epoxy-free carboxyl group containing water-thinnable curable binder (binder D) for coatings which comprises reacting together a novel polyglycidyl ether of this invention with a dicarboxylic acid in the presence of an esterification catalyst. This reaction is preferably carried out at a temperature of from 60 to 170°C.

The dicarboxylic acid may conveniently be an aliphatic dicarboxylic acid. Examples of such compounds include succinic acid, maleic acid, glutaric acid, itaconic acid, adipic acid, pimelic acid, suberic acid, azelaic acid, sebacic acid, 1,12-dodecanedioic acid, dodecenyl succinic acid, noneyl succinic acid, dimerised fatty acid.

Another class of dicarboxylic acids which may conveniently be used are those obtained by partial esterification or amidation of a polycarboxylic acid or a polycarboxylic acid anhydride. Examples of such compounds include the monoalkylesters of trimellitic anhydride and the dialkylesters of pyromellitic

anhydride, preferably these alkylesters are derived from primary alkanols having at least 6 carbon atoms. Further examples of these ester type dicarboxylic acids can e.g. be obtained by partial esterification or amidation of the reaction product of 2 moles of trimellitic anhydride and 1 mole of an aliphatic diol.

Preferred dicarboxylic acids are those having water solubility below 0.3 g/100 g water at 20°C. Azelaic acid and sebacic acid have been found to be very suitable dicarboxylic acids.

It will be appreciated by those skilled in the art that the ultimate reaction product of the reaction between the dicarboxylic acid and the polyglycidyl ether will be an essentially linear molecule. In order to be potentially water soluble or water dispersible after neutralization and further more in order to be essentially free of epoxy groups this molecule should have on average a carboxyl group at each end and an acid value in the range of at least 20 mg KOH/g. To this end the dicarboxylic acid and the glycidyl ether compounds should be reacted in such amounts that there is an excess of 2 equivalents of acid over the total equivalents of epoxy. When the water-thinnable curable binder (D) is used in compositions which will be applied by an electrodeposition process, the acid value should not be too high for process technical reasons, hence for such an application it is preferred that the acid value of the water soluble binder is in the range of from 20 to 80 mg KOH/g. Most preferably the acid value should be in the range of from 30 to 50 mg mg KOH/g.

If desired a quantity of a known liquid or solid polyglycidyl ether, may be included with the above polyglycidyl ether in the reaction with the dicarboxylic acid in the above process for preparing a water-thinnable curable binder (D).

The amount of polyglycidyl ether which can optionally be coreacted with the dicarboxylic acid and the polyglycidyl ether is determined by the amount of monofunctional phenol which has to be incorporated in order to achieve the afore-mentioned improvements. Coatings with improved flow and reduced porosity can be obtained when the amount of monofunctional phenol incorporated in the ultimate water-thinnable binder (D) is in the range of from 5 to 40 %w. Preferably the amount of monofunctional phenol is in the range of from 10 to 25%w.

In the preparation of the water-thinnable curable binder (D), reaction between aliphatic hydroxyl groups and epoxy groups or carboxyl groups should be avoided. This may be achieved by employing a tertiary amine, e.g. 2-dimethylamino-2-methyl-1-propanol, as catalyst for the reaction of epoxy groups with carboxyl groups.

Tertiary amine catalysts are preferably used in amounts of from 0.1 to 1 %w of reactants. Preferably the reaction between the dicarboxylic acid and the glycidyl ether is conducted at a temperature in the range of from 100 to 150°C.

The invention further provides an aqueous thermosetting coating composition comprising a binder (D) as described hereinbefore and a cross-linking compound (B) in a weight ratio (D:B) in the range of from 95:5 to 60:40, preferably 85:15 to 65:35, more preferably 85:15 to 75:25, compound (B) having been combined with binder (D) before or after neutralization thereof. The invention also specifically provides use of a thermosetting coating composition of the invention in electrodeposition of articles (anodic electrodeposition).

Preferred cross-linking compounds, for addition to the binder compounds before or after neutralization, are water-soluble cross-linking agents of the aminoplast type, such as alkoxylated reaction products of formaldehyde with melamine or benzoguanamine.

Other cross-linking compounds include urea-formaldehyde resins, phenolformaldehyde resins, and blocked polyisocyanates. Pigments, fillers, dispersing agents, and other components known in the art of paint formulation may further be added. Addition of small amounts (up to 1 %w) of non-ionic surfactant may be useful for further stabilization of aqueous compositions or improvement of the wetting during application. Co-solvents, such as 2-n-butoxyethanol and, especially, 2-n-hexyloxyethanol, may advantageously be included. The water for use in the aqueous compositions is preferably purified such as by distillation or demineralization. The water-dilutable compositions may be applied by a variety of methods known in the art, onto a variety of substrates, in particular metals such as bare steel, phosphated steel, chromate-treated steel, zinc, tin plate (for can coating), and aluminium (also e.g. for can coating), to produce cured coatings of desireable thickness, from 2 micrometres upwards up to in general 40 micrometres.

Curing can be performed by stoving, for example, at temperatures of from 150 to 220°C, with curing times varying from 2 to 30 minutes.

The thermosetting coating compositions may generally be applied by electrodeposition and other methods such as spraying or dipping, and are particularly suitable for coating cans by electrodeposition. Those skilled in the art will appreciate the need to select compounds which are approvable by regulatory authorities when food or beverage cans are to be coated.

The invention will be further understood from the following examples, in which parts and percentages are by weight, unless otherwise indicated, and various terms are defined as follows:

"Multifunctional polyether I" is a semi-solid multifunctional epoxy novolac resin of average molecular weight 680 g, containing on average 3.5 epoxy groups per molecule,

"Multifunctional polyether II" is a multifunctional epoxy diphenylolpropane novolac resin of average molecular weight 732 g, containing on average 3.5 epoxy groups per molecule,

"Multifunctional polyether III" is a semi-solid multifunctional epoxy novolac resin of average

molecular weight 665 g, containing on average 3.5 epoxy groups oer molecule.

"Polyether P" is a solid diglycidyl ether of 2,2-bis(4-hydroxyphenyl)propane of epoxy molar mass 485 g, containing on average 1.85 epoxy groups per molecule.

CYMEL 1141 (trade mark) is a highly alkylated melamine-formaldehyde curing resin containing methoxy and isobutoxy substituents and acidic chelating groups, 85% solids in isobutanol, AV 22 ± 3 mg KOH/g.

"AV is acid value, expressed in mg KOH/g.

'Amine value" is expressed in milli-equivalents per gram.

Example 1

Multifunctional polyether I (680 g, 1 mol, 3.5 epoxy equivalents) and p-iso-octylphenol (412 g, 2 mol) were heated with stirring to 140°C. When the mixture was homogeneous, a 50% aqueous solution of tetramethylammonium chloride (0.55 g) was added and the mixture was maintained at 140°C until reaction was complete (4 hours). The product was thinned with 2-n-butoxyethanol (546 g) and cooled to ambient temperature (20°C). The resulting solution contained 66.7% solids, the desired polyether product having average molecular weight 1092 and an epoxy content of 1.37 meq.g solids (average of 1.5 epoxy groups per molecule).

Example 2

Multifunctional polyether I (680 g, 1 mol, 3.5 epoxy equivalents) and p-iso-octylphenol (309 g, 1.5 mol) were heated with stirring to 140°C. When the mixture was homogeneous, a 50% aqueous solution of tetramethylammonium chloride (0.55 g) was added and the mixture was maintained at 140°C for 4 hours, until reaction was complete. Dilution with 2-n-butoxyethanol (495 g) and cooling to ambient temperature gave a solution containing 66.7% solids, the desired product having average molecular weight 989 and an epoxy content of 2.02 meq./g solids (average of 2 epoxy groups per molecule).

Example 3

Multifunctional polyether II (732 g, 1 mol, 3.5 epoxy equivalents) and p-iso-octylphenol (412 g, 2 mol) were heated with stirring to 140°C. When the mixture was homogeneous, a 50% aqueous solution of tetramethylammonium chloride (0.55 g) was added and the mixture was maintained at 140°C for 4 hours, until reaction was complete. Dilution with 2-n-butoxyethanol (572 g) and cooling to ambient temperature gave a solution of the desired product (solids content 66.7%), which had average molecular weight 1144 and an epoxy content of 1.31 meq./g solids (average of 1.5 epoxy groups per molecule).

Example 4

Multifunctional polyether II (732 g, 1 mol, 3.5 epoxy equivalents) and p-iso-octylphenol (309 g, 1.5 mol) were heated with stirring to 140°C. When the mixture was homogeneous, a 50% aqueous solution of tetramethylammonium chloride was added and the mixture was maintained at 140°C for 4 hours, until reaction was complete. The mixture was then diluted with 2-n-butoxyethanol (520 g) and the resulting solution of the desired product (solids content 66.7%) was cooled to ambient temperature. The product had average molecular weight 1041 and an epoxy content of 1.92 meq./g solids (average of 2 epoxy groups per molecule).

Example 5

Adduct for use as cathodic electrodeposition binder

A 95% aqueous solution of 2-amino-2-methyl-1-propanol (93.7 g, 1 mol) and water (40 g) were heated with stirring to 100°C. The resulting solution of Example 1 was added over 2 hours, with stirring, while the temperature was maintained at 100 to 110°C. After addition was complete, the mixture was kept at 100 to 120°C with stirring for a further 8 hours, until reaction was complete (amine value 0.85, on solids).

Example 6

Adduct for use as cathodic electrodeposition binder

A 95% aqueous solution of 2-amino-2-methyl-1-propanol (93.7 g, 1 mol) and water (40 g) were heated with stirring to 100°C. The resulting solution of Example 3 was added over 2 hours, with stirring, while the temperature was maintained at 100 to 110°C. The mixture was kept for a further 8 hours at 100 to 120°C with stirring, until reaction was complete (amine value 0.81, on solids).

Example 7

Adduct for use as anodic electrodeposition binder

Glycine (56.25 g, 0.75 mol), water (187.5 g) and potassium hydroxide (48.5 g, 0.75 mol) were heated with stirring to 100°C. The polyether product of Example 1 (1638.55 g of a 66.7% solution in 2-n-butoxyethanol, 1 mol polyether product) was added slowly, with stirring, and the reaction mixture was stirred at 100°C for a further 4 hours. Water (941 g) was added and following acidification the precipitated product was isolated from the suspension. (AV 36.6 mg KOH/g, on solids).

Example 8

Adduct for use as anodic electrodeposition binder

The procedure of Example 7 was repeated using the polyether product of Example 3 (1717.55 g of a 66.7% solution in 2-n-butoxyethanol, 1 mol polyether product) in place of the polyether product of Example 1. The resulting precipitated product had AV 35.1 mg KOH/g, on solids.

Examples 9 and 10

Cathodic electrodeposition

The adducts of Examples 5 and 6, in the form of the respective mixtures obtained in those Examples, were blended with "CYMEL 1141" in binder solids to "CYMEL 1141" weight ratio 70:30, neutralized with an equivalent amount (α = 1.0) of lactic acid and thinned by gradual addition of demineralized water to a final solids content of 15%.

Electrodeposition was carried out by direct current for electrodeposition time of 0.1 second at 200 V to obtain a coating with a thickness after baking of 4 to 6 μm. The electrodeposition cell comprised a flat stainless steel anode and a flat exchangeable tin plate cathode which were kept 1.0 mm apart by means of insulating spacers. The coated area was a rectangle of 40 × 50 mm. After electrodeposition, the coated tin plates were rinsed with water and cured at 200°C for 3, 5 or 10 minutes. The coatings were assessed visually for appearance (5: smooth, no bubbles, 4: orange-peel surface, 3: orange-peel, few bubbles, 2: many bubbles) and were evaluated for solvent resistance (number of double rubs with a methylethylketone — moistened cloth necessary to remove the coatings ("MEK rubs")) and sterilization resistance (exposure to water at 121°C for 90 minutes, assessment on a scale ranging from 5: unaffected, to 0: very heavy blushing).

Results of the above tests are given in Table I following:

TABLE I

| Example | 9 | | | 10 | | |
|---|---|---|---|---|---|---|
| Adduct of Example | 5 | | | 6 | | |
| pH of electrodeposition (ED) composition | 3.8 | | | 3.6 | | |
| specific conductivity of ED composition at 23 °C (μS/cm) | 514 | | | 475 | | |
| Stoving time (min.) | 3 | 5 | 10 | 3 | 5 | 10 |
| Film appearance | 5 | 5 | 5 | 5 | 5 | 5 |
| MEK rubs | 45 | >100 | >100 | 45 | >100 | >100 |
| Sterilization resistance | 5 | 5 | 5 | 5 | 5 | 5 |

Examples 11 and 12

Anodic electrodeposition

The precipitated adducts of Examples 7 and 8, were blended with hexamethoxy methyl melamine ("CYMEL 1141") in binder solids to "CYMEL 1141" weight ratio 80:20, neutralized with an equivalent amount (α = 1.0) of 2-dimethylamino-2-methyl-1-propanol and thinned by gradual addition of demineralized water to final solids content of 15% (Example 11) and 12% (Example 12).

Electrodeposition was carried out by direct current for electrodeposition time of 0.1 second at 125 V (Example 11) and 150 V (Example 12) to obtain coatings with a thickness after baking of 4 to 6 μm. The electrodeposition cell comprised a flat stainless steel cathode and a flat exchangeable tin plate anode which were kept 1.0 mm apart by means of insulating spacers. The coated area was a rectangle of 40 × 50 mm. After electrodeposition, the coated tin plates were rinsed with water and cured at 200°C for 3, 5 or 10 minutes. The coatings were assessed as in Examples 9 and 10.

Results are given in Table II following:

TABLE II

| Example | 11 | | | 12 | | |
|---|---|---|---|---|---|---|
| Adduct of Example | 7 | | | 8 | | |
| pH of ED composition | 9.4 | | | 9.6 | | |
| specific conductivity of ED composition at 23 °C (μS/cm) | 650 | | | 380 | | |
| Stoving time (min.) | 3 | 5 | 10 | 3 | 5 | 10 |
| Film appearance | 3–4 | 3–4 | 3–4 | 3–4 | 3–4 | 3–4 |
| MEK rubs | 80 | 100 | >100 | 28 | 40 | 60 |
| Sterilization resistance | 5 | 5 | 5 | 5 | 5 | 5 |

Examples 13 and 14

Can coating by cathodic electrodeposition

The adduct of Example 5 (1000 g; 67% solids) was blended with "CYMEL 1141" (336 g; 85% solids) (i.e. solids weight ratio 70:30), neutralized with an equivalent amount ($\alpha = 1$) of lactic acid (43 g of 90% aqueous solution) and thinned with demineralized water (4970 g) to a solids content of 17.5%. The resulting coating composition had pH 3.8 and conductivity $454 \times 10^{-6}$ mhos at 20°C and contained 6% co-solvent (primarily 2-n-butoxyethanol) (Example 13).

A portion of the resulting composition was diluted with 2-n-butoxyethanol to a co-solvent content of 8% (Example 14).

These compositions were used to coat 330 ml tin-plate cans by cathodic electrodeposition. The can formed the cathode of an electrodeposition cell, the anode being a stainless steel member inserted within the can at a substantially uniform separation of 2 millimetres from the can. A potential difference was applied between the can and the anode, for a total time of 240 milliseconds. After electrodeposition the coated can was vigorously rinsed with demineralized water, and the coating was cured by stoving the coated can for 3 minutes at 200°C.

The coating composition of Example 13 when used at 30°C, at 180 volts gave total cured coating weight 160 mg per can, and at 200 volts gave total cured coating weight 200 mg per can, and at 20°C and at 240 volts gave total cured coating weight 133 mg per can. No trace of coating rupture was observed and the resulting cured coatings were smooth and bubble-free.

The coating composition of Example 14 when used at 25°C, at 180 volts gave total cured coating weight 190 mg per can, at 200 volts gave total cured coatings weight 220 mg per can and at 220 volts gave total cured coated weight 290 mg per can. No trace of coating rupture was observed and the resulting cured coatings were smooth and bubble-free.

Example 15

Adduct for use as cathodic electrodeposition binder

A 95% aqueous solution of 2-amino-2-methyl-1-propanol (187.4 g, 2 mol), water (40 g) and 2-n-butoxyethanol (100 g) were heated with stirring to 110°C. A liquid bisphenol-A-derived polyglycidyl ether of epoxy molar mass 198 g (396 g) was added over 1 hour, with stirring, followed by addition over 2 hours with stirring of a solution of polyether product prepared as in Example 1 (1638 g; 66.7% solids). The reaction mixture was stirred at 110°C for a further 4 hours, until reaction was complete.

Examples 16 and 17

Can coating by cathodic electrodeposition

The adduct of Example 15 (1500 g) was blended with "CYMEL 1141" (529.4 g), neutralized with lactic acid (66 g) and thinned with demineralized water (7495 g), in similar manner to that of Example 13. The resulting coating composition had a solids content of 15.6%, contained 5.5% co-solvent and had pH 4.7 and

conductivity 758 × $10^{-6}$ mhos at 20°C (Example 16).

A portion of the resulting composition was diluted with 2-n-butoxyethanol to a co-solvent content of 7.0% (Example 17).

These compositions were used to coat cans by the cathodic electrodeposition process described in Examples 13 and 14.

The coating composition of Example 16 when used at 21°C at 200 volts gave total cured coating weight 89 mg per can. There was no film rupture and the resulting cured coatings were smooth and bubble-free.

The coating composition of Example 17 when used at 26°C at 180 volts gave total cured coating weight 106 mg per can. When this voltage was applied for a total time of 400 milliseconds total cured coating weight were in excess of 140 mg per can. In each case, there was no film rupture and the resulting cured coatings were smooth and bubble-free.

Example 18

Adduct for use as cathodic electrodeposition binder

A 95% aqueous solution of 2-amino-2-methyl-1-propanol (154.6 g, 1.65 mol), water (40 g) and 2-n-butoxyethanol (100 g) were heated with stirring to 100°C. To the resulting mixture was added a homogeneous mixture of reaction product from Example 1 (1638 g; 66.7% solids; 1.5 epoxy equivalents) polyether P (727.5 g, 1.5 epoxy equivalents) and 2-n-butoxyethanol (197 g), over 2 hours, with stirring, while the temperature was maintained at 100 to 110°C. After addition was complete, the mixture was kept at 100 to 120°C with stirring for a further 8 hours, until reaction was complete (amine value 0.84 on solids). The resulting product had a solids content of 68.8 %w.

Example 19

Adduct for use as cathodic electrodeposition binder

The procedure of Example 18 was followed, with the exception that only 147.6 g (1.575 mol) of the 95%w aqueous solution of 2-amino-2-methyl-1-propanol was used. The resulting product had a solids content of 68.8%w and amine value 0.80 on solids.

Example 20

The procedure of Example 18 was followed, with the exception that 168.6 g (1.8 mol) of the 95%w aqueous solution of 2-amino-2-methyl-1-propanol was used. The resulting product had a solids content of 68.9%w and amine value 0.91 on solids.

Example 21

Cathodic electrodeposition composition

The adduct of Example 18 (321.6 g), "CYMEL 1141" (60 g) and 2-n-hexyloxyethanol (61.2 g) were mixed together at ambient temperature (20°C). The resulting homogeneous mixture was neutralized with 90%w lactic acid in water (12.5 g, $\alpha = 0.7$) and thinned with demineralized water (2267.4 g). The resulting coating composition had a solids content of 10%w, pH 4.2 and conductivity 650 μs/cm at 20°C.

Example 22

Cathodic electrodeposition composition

The adduct of Example 19 (804 g), "CYMEL 1141" (150 g) and 2-n-hexyloxyethanol (153 g) were mixed together at ambient temperature (20°C). The resulting homogeneous mixture was neutralized with 90%w lactic acid in water (34 g, $\alpha = 0.77$) and thinned with demineralized water (3400.8 g). The resulting coating composition had a solids content of 15%w, pH 4.0 and conductivity 650 μs/cm at 20°C.

Example 23

Cathodic electrodeposition composition

The adduct of Example 20 (321.6 g), "CYMEL 1141" (60 g) and 2-n-hexyloxyethanol (61.2 g) were mixed together at ambient temperature (20°C). The resulting homogeneous mixture was neutralized with 90%w lactic acid in water (12.5 g, $\alpha = 0.62$) and thinned with demineralized water (1360 g). The resulting coating composition had a solids content of 15%w, pH 4.9 and conductivity 984 μs/cm at 20°C.

Examples 24 to 26

Use of cathodic electrodeposition compositions in can coating

The coating compositions of Examples 21 to 23 were used to coat 330 ml tin-plate cans by cathodic electrodeposition. The can formed the cathode of an electrodeposition cell, the anode being a stainless steel member inserted within the can at a substantially uniform separation of 2 millimetres from the can. A potential difference was applied between the can and the anode, for a total time of 400 milliseconds. After electrodeposition the coated can was vigorously rinsed with demineralized water, and the coating was cured by stoving the coated can for 5 or 10 minutes at 200°C.

After curing and measuring coating weight, porosity was tested by using an electrolyte solution containing a red indicator (6.2 V for 30 sec). Subsequently the cans were filled with a second clear electrolyte solution. The areas of the can not covered by the coating, became now red coloured. Using this

method it is easy to identify pores or other coating defects.

Similar experiments a, b and c were effected with the coating composition of Example 13 (pH 3.8, conductivity 501 μs/cm), and with similar coating compositions based on the adducts of Examples 5 and 15 but wherein the adduct "CYMEL 1141", solids weight ratio was 80:20 instead of 70:30. Results are given in Table III following, in which solvent resistance is expressed in terms of "MEK rubs", i.e. the number of double rubs with a methylethylketone-moistened cloth necessary to remove the coatings, and flexibility was determined by the wedge bend test, in which coated tin-plate is bent over a 3 mm mandrel and impacted into a wedge shape, immersed in a $CuSO_4$/HCl solution for 2 minutes, and staining, which is observed wherever breaks in the film occur, is recorded.

TABLE III

| Example | Composition of Example | Adduct "CYMEL 1141" solids wt. ratio | Application voltage (V) | Stoving time (min) | Film thickness (μm) | Coating weight (mg) | Porosity (mA) | MEK rubs | Flexibility wedge bend (% failure) |
|---|---|---|---|---|---|---|---|---|---|
| 24 | 21 | 81.3 : 18.7 | 115 | 5<br>10 | 5<br>5 | 216<br>208 | 0.6<br>0.6 | 70-80<br>>100 | 20<br>26 |
| 25 | 22 | 81.3 : 18.7 | 110 | 5<br>10 | 5<br>5 | 198<br>194 | 0.4<br>0.7 | 60-80<br>>100 | 28<br>25 |
| 26 | 23 | 81.3 : 18.7 | 110 | 5<br>10 | 5.5<br>5.5 | 250<br>245 | 0.2<br>1.5 | 80-90<br>>100 | 20<br>- |
| a | 13 | 70 : 30 | 110 | 5<br>10 | 5<br>5 | 225<br>209 | 0.5<br>0.4 | >100<br>>100 | 70<br>70 |
| b | 5 | 80 : 20 | 110 | 5<br>10 | 5<br>5 | 192<br>220 | 0.2<br>0.5 | 14-20<br>16-20 | 100<br>100 |
| c | 15 | 80 : 20 | 110 | 10 | 5 | 200 | - | < 20 | 100 |

Example 27

(a) Multifunctional polyether III (665 g, 1 mol, 3.5 epoxy equivalents) and p-(1.1.3.3-tetramethyl-butyl)-phenol (309 g, 1.5 mol) were heated with stirring to 140°C. When the mixture was homogeneous, a 50%w aqueous solution of tetramethylammonium chloride (1 g) was added and the mixture was maintained at 140—150°C until the reaction was complete (4 hours). The resulting product having an epoxy content of 2.05 meq./g solids (average of 2 epoxy equivalents per molecule) and a residual phenolic hydroxyl content of 0.01 meq/g solids.

(b) Adduct for use as anodic electrodeposition binder

Polyether P (1940 g, 4 epoxy equivalents) was added to the reaction product of step (a) and heated at 140°C until the mixture was homogeneous. Subsequently azelaic acid (752 g, 4 mol, 8 acid equivalents) and 2-dimethylamino-2-methyl-1-propanol (5 g) were added and the mixture was heated to 140—150°C with stirring and kept at this temperature for a further 6 hours, until the reaction was complete. The resulting binder, which had an epoxy content of 0.02 meq/g solids and an acid value of 31 mg KOH/g, was allowed to cool to 120°C whereupon it was diluted with 2-n-butoxyethanol (916 g), resulting in a clear viscous solution having a solids content of 80%w. The ultimate binder had an incorporated alkylphenol content of 8.4%w.

Example 28

Adduct for use as anodic electrodeposition binder

Twice the amount of the reaction product of Example 27(a) (i.e. 1948 g, 4 epoxy equivalents), 970 g of polyether P (2 epoxy equivalents) and 752 g azelaic acid (4 mol, 8 acid equivalents) were reacted in the presence of 2-dimethylamino-2-methyl-1-propanol following the procedure described in Example 27. 987 g of 2-n-buthoxyethanol was used to dilute the resulting binder (acid value 32 mg KOH/g), which resulted in a clear viscous solution having a solids content of 78.8%w.

The ultimate reaction product had an incorporated alkylphenol content of 16.8%w.

Example 29

(a) Multifunctional polyether III (665 g, 1 mol, 3.5 epoxy equivalents) and p-tertiary butyl phenol (300 g, 2 mol) were heated with stirring to 140°C. When the mixture was homogeneous, a 50%w aqueous solution of tetramethylammonium chloride (1 g) was added and the mixture was maintained at 140—150°C until the reaction was complete (4 hours). The resulting product having an epoxy content of 1.57 meq.g solids (average of 1.51 epoxy equivalents per molecule).

(b) Adduct for use as anodic electrodeposition binder

The reaction product of Example 29(a) (965 g, 1.5 epoxy equivalents) was reacted with sebacic acid (253 g, 1.25 mol, 2.5 acid equivalents) in the presence of 2.5 g 2-dimethylamino-2-methyl-1-propanol following the procedure described in Example 27(b). The ultimate binder (acid value 48 mg KOH/g) was diluted with 304 g of 2-n-butoxyethanol to give a clear viscous solution having a solids content of 80%w. The incororated alkylphenol content of the ultimate binder was 24.6%w.

Example A (comparative)

Adduct for use as anodic electrodeposition binder

Polyether P (1940 g, 4 epoxy equivalents) was reacted with azelaic acid (564 g, 3 mol, 6 acid equivalents) in the presence of 6 g of 2-dimethylamino-2-methyl-1-propanol under the conditions as described in Example 27(b) to arrive at a binder having an acid value of 43.8 mg KOH/g solids and no residual epoxy functionality. This product was diluted with 628 g of 2-n-butoxyethanol to arrive at a viscous solution having a solids content of 79.9%w.

Examples 30—32

Anodic electrodeposition composition

The adducts of Examples 27—29, in the form of the respective solutions in 2-n-butoxyethanol obtained in those Examples, were blended with CYMEL 1141 in binder solids to CYMEL 1141 weight ratio 70:30 and subsequently further diluted with 2-n-hexyloxyethanol, to arrive at solutions having a solids content of 76%w, neutralized with a 90% equivalent amount of 2-dimethylamino-2-methyl-1-propanol and diluted by gradual addition of demineralized water to a final solids content of 15.5%w.

Example B (comparative)

Anodic electrodeposition

The adduct of Example A, in the form of its solution in 2-n-butoxyethanol, as obtained in said Example was processed following the procedure of Examples 30—32.

Examples 33—35

Use of anodic electrodeposition compositions in can coating

The coating compositions of Examples 30 to 32 were used to coat 330 ml tin-plate cans by anodic electrodeposition. The can formed the anode of an electrodeposition cell, the cathode being a stainless steel member inserted within the can at a substantially uniform separation of 2 millimetres from the can. A potential difference, which would result after baking in a coating weight per can in the range of 180 to 220

mg corresponding with a dry film thickness in the range of 6 to 7 mm, was applied between the can and the cathode, for a total time of 400 milliseconds. After electrodeposition the coated can was vigorously rinsed with demineralized water, and the coating was cured by stoving the coated can for 5 minutes at 200°C.

After curing and measuring coating weight, porosity was tested by using an electrolyte solution containing a red indicator (6.2 V for 30 sec). Subsequently the cans were filled with a second clear electrolyte solution. The areas of the can not covered by the coating, became red. Using this method it is easy to identify pores or other coating defects.

For comparative reasons similar experiments were conducted with the composition of Example A. Results are given in Table IV following, in which solvent resistance is expressed in terms of "MEK rubs", i.e. the number of double rubs with a methylethylketone-moistened cloth necessary to remove the coatings, while the film appearance (flow) is expressed as a numerical rating resulting from a visual assessment (5: smooth surface, excellent flow, no defects, 4: orange-peel type surface, 3: orange-peel type surface and few bubbles and/or pinholes, 2: many bubbles and/or pinholes).

The sterilisation resistance of the coatings was determined by exposure to water at 121°C for 90 minutes and rated according to a numerical scale ranging from 5: no blushing to 0: very heavy blushing.

TABLE IV

| Example | Composition of Example | Alkylphenol incorporated (%w) | Application voltage (V) | Coating weight (mg) | Film appearance (flow) | Porosity (mA) | MEK rubs | Sterilization resistance |
|---|---|---|---|---|---|---|---|---|
| 33 | 30 | 8.4 | 90 | 210 | 4-5 | 1.0 | >100 | 5 |
| 34 | 31 | 16.8 | 100 | 215 | 5 | 0.2 | >100 | 5 |
| 35 | 32 | 24.6 | 100 | 205 | 5 | 0.8 | >100 | 4-5 |
| B | A | 0 | 110 | 195 | 5 | 70 | >100 | 4-5 |

## Claims

1. A polyglycidyl ether as a novel starting material for the preparation of water-thinnable curable binders for coatings having on average n epoxy groups per molecule, where $1 < n \leq 2$, which comprises the reaction product of a multifunctional polyglycidyl ether having on average x epoxy groups per molecule, where $x > 2$, with (x-n) mol of non-halogenated monofunctional phenol per mol of the multifunctional polyglycidyl ether, said phenol or mixture thereof carrying substituents selected from $C_{1-16}$ alkyl, $C_{3-16}$ alkenyl, $C_{1-4}$ hydroxyalkyl, $C_{2-13}$ alkoxycarbonyl and $C_{1-16}$ alkoxy groups.

2. A polyglycidyl ether according to claim 1, wherein the multifunctional polyglycidyl ether is an epoxy novolac resin wherein $3 \leq n \leq 4$.

3. A polyglycidyl ether according to claim 1 or 2, wherein $1.3 \leq n \leq 2$.

4. A polyglycidyl ether according to any of claims 1 to 3, wherein the multifunctional phenol is phenol substituted in the para-position by a $C_{4-12}$ alkyl substituent.

5. A process for preparing a polyglycidyl ether according to any of claims 1 to 4, which comprises reacting the multifunctional polyglycidyl ether with the monofunctional phenol at a temperature in the range 120 to 180°C in the presence of an acid or base catalyst.

6. A process for the preparation of a water-thinnable curable binder for coatings, which comprises reacting a polyglycidyl ether according to any of claims 1 to 4, in aqueous medium with an amino compound containing on average two amino-hydrogen atoms per molecule or an alkali metal salt of an amino acid.

7. A process as claimed in claim 6, in which a diglycidyl ether is included in the polyglycidyl ether.

8. An aqueous thermosetting coating composition comprising a binder (A) prepared according to claim 6 or 7 and a cross-linking compound (B) in weight ratio (A:B) of from 95:5 to 65:35, compound (B) having been combined with binder (A) before or after neutralisation thereof.

9. A process for the preparation of a water-thinnable curable binder for coatings, which comprises reacting together in aqueous medium, the polyglycidyl ether according to any of claims 1 to 4, a diglycidyl ether having an epoxy molar mass in the range of from 300 g to 1500 g and an amino compound containing on average two amino-hydrogen atoms per molecule, the weight ratio of the polyglycidyl ether to the diglycidyl ether being in the range of from 75:25 to 45:55 and the amino compound being included in an amount sufficient to provide 1 to 1.5 amino-hydrogen atoms per epoxy group from the polyglycidyl and diglycidyl ethers.

10. A process according to claim 9, wherein the diglycidyl ether has an epoxy molar mass in the range of from 400 g to 1100 g.

11. An aqueous thermosetting coating composition comprising a binder (C) prepared according to claim 9 or 10 and a cross-linking compound (B) in a weight ratio (C:B) in the range of from 95:5 to 65:35, compound (B) having combined with binder (C) before or after neutralisation thereof.

12. A process for the preparation of an essentially epoxy-free, carboxyl-group containing water-thinnable curable binder for coatings which comprises reacting together in the presence of an esterification catalyst a polyglycidyl ether according to any one of claims 1 to 4 and a dicarboxylic acid.

13. A process according to claim 12, wherein the dicarboxylic acid has a water solubility below 0.3g/100g water at 20°C.

14. A process according to claim 12 or 13, wherein the dicarboxylic acid is reacted with a mixture of the polyglycidyl ether and a diglycidyl ether having an epoxy molar mass in the range of from 170 g to 1500 g.

15. A process according to any of claims 12 to 14, wherein the water-thinnable curable binder has a content of incorporated monofunctional phenol in the range of from 10 to 25%w.

16. An aqueous thermosetting coating composition comprising a binder (D) prepared according to any of claims 12 to 15 and a cross-linking compound (B) in a weight ratio (D:B) in the range of from 95:5 to 60:40, compound (B) having been combined with binder (D) before or after neutralisation thereof.

## Patentansprüche

1. Polyglycidylether als neues Ausgangsmaterial zur Herstellung von mit Wasser verdünnbaren härtbaren Binders für Überzüge mit in Mittel n Epoxygruppen im Molekül, wobei $1 < n \leq 2$ ist, umfassend das Umsetzungsprodukt eines multifunctionellen Polyglycidylethers mit im Mittel x Epoxygruppen im Molekül, wobei $x < 2$ ist, mit (x-n) Mol eines nicht halogenierten monofunctionellen Phenols pro Mol des multifunctionellen Polyglycidylethers, wobei das Phenol oder Gemisch daraus Substituenten enthält, ausgewählt aus $C_{1-16}$-Alkyl, $C_{3-16}$-Alkenyl, $C_{1-4}$-Hydroxyalkyl, $C_{2-13}$-Alkoxycarbonyl und $C_{1-16}$-Alkoxygruppen.

2. Polyglycidylether nach Anspruch 1, wobei der multifunctionelle Polyglycidylether ein Epoxynovolak-Harz ist, bei dem $3 \leq n \leq 4$ ist.

3. Polyglycidylether nach Anspruch 1 oder 2, wobei $1,3 \leq n \leq 2$ ist.

4. Polyglycidylether nach einem der Ansprüche 1 bis 3, wobei das multifunctionelle Phenol ein Phenol ist, das in p-Stellung durch einen $C_{4-12}$-Alkylsubstituenten substituiert ist.

5. Verfahren zur Herstellung eines Polyglycidylethers nach einem der Ansprüche 1 bis 4, umfassend die Umsetzung des multifunctionellen Polyglycidylethers mit dem monofunktionellen Phenol bei einer

Temperatur im Bereich von 120 bis 180°C in Gegenwart eines sauren oder basischen Katalysators.

6. Verfahren zur Herstellung eines mit Wasser verdünnbaren härtbaren Binders für Überzüge, umfassend die Umsetzung eines Polyglycidylethers nach einem der Ansprüche 1 bis 4 in einem wäßrigen Medium mit einer Aminoverbindung, enthaltend im Mittel 2 Aminowasserstoffatome pro Molekül, oder einem Alkalimetalsalz einer Aminosäure.

7. Verfahren nach Anspruch 6, wobei ein Diglycidylether in dem Polyglycidylether enthalten ist.

8. Wäßrige heiß härtende Überzugsmasse, umfassend einen Binder (A), hergestellt nach Anspruch 6 oder 7, und eine Vernetzungsverbindung ([B) in einem Gewichtsverhältnis (A:B) von 95:5 bis 65:35, wobei die Verbindung (B) mit dem Binder (A) zusammengebracht worden ist vor oder nach deren Neutralisation.

9. Verfahren zur Herstellung eines mit Wasser verdünnbaren härtbaren Binders für Überzüge, umfassend die Umsetzung des Polyglycidylethers nach einem der Ansprüche 1 bis 4, eines Diglycidylethers mit einer Epoxymolekularmasse im Bereich von 300 bis 1500 g und einer Aminoverbindung, enthaltend im Mittel 2 Aminowasserstoffatome pro Molekül in einem wäßrigen Medium, wobei das Gewichtsverhältnis des Polyglycidylethers zu dem Diglycidylether im Bereich von 75:25 bis 45:55 liegt, und die Aminoverbindung in einer Menge eingebaut wird, die ausreicht, um 1 bis 1,5 Aminowasserstoffatome pro Epoxygruppe von dem Polyglycidyl- und Diglycidylether zu ergeben.

10. Verfahren nach Anspruch 9, wobei der Diglycidylether eine Epoxymolekularmasse im Bereich von 400 g bis 1100 g aufweist.

11. Wäßrige heiß härtende Überzugsmasse, umfassend einen Binder (C), hergestellt nach Anspruch 9 oder 10, und eine Vernetzungsverbindung (B) in einem Gewichtsverhältnis (C:B) im Bereich von 95:5 bis 65:35, wobei die Verbindung (B) mit dem Binder (C) zusammengebracht worden ist vor oder nach der Neutralisation.

12. Verfahren zur Herstellung eines im wesentlichen epoxyfreien, Carboxylgruppen enthaltenden, mit Wasser verdünnbaren härtbaren Binders für Überzüge, umfassend die Umsetzung eines Polyglycidylethers nach einem der Ansprüche 1 bis 4 mit einer Dicarbonsäure in Gegenwart eines Veresterungskatalysators.

13. Verfahren nach Anspruch 12, wobei die Dicarbonsäure eine Wasserlöslichkeit unterhalb 0,3 g pro 100 g Wasser bei 20°C besitzt.

14. Verfahren nach Anspruch 12 oder 13, wobei die Dicarbonsäure umgesetzt wird mit einem Gemisch des Polyglydicidylethers und eines Diglycidylethers mit einer Epoxymolekularmasse im Bereich von 170 g bis 1500 g.

15. Verfahren nach einem der Ansprüche 12 bis 14, wobei der mit Wasser verdünnbare härtbare Binder einen Gehalt an eingebautem monofunktionellen Phenol im Bereich von 10 bis 25 Gew.-% aufweist.

16. Wäßrige heiß härtende Überzugsmasse, umfassend einen Binder (D), der hergestellt worden ist nach einem der Ansprüche 12 bis 15, und eine Vernetzungsverbindung (B) im Gewichtsverhältnis (D:B) im Bereich von 95:5 bis 60:40, wobei die Verbindung (B) mit dem Binder (D) zusammengebracht worden ist vor oder nach der Neutralisation.

**Revendications**

1. Ether polyglycidylique à titre de nouveau produit de départ pour la préparation de liant durcissables pouvant être dilués dans l'eau pour des revêtements, ayant en moyenne n groupes époxy par molécule, où $1 < n \leq 2$, qui comprend le produit de la réaction d'un éther polyglycidylique multifonctionnel ayant en moyenne x groupes époxy par molécule, où $x > 2$, avec (x-n) moles d'un phénol monofonctionnel non halogéné par mole de l'éther polyglycidylique multifonctionnel, ledit phénol ou un mélange de ceux-ci portant des substituants choisis parmi les groupes alkyle en $C_{1-16}$, alcényle en $C_{3-16}$, hydroxyalkyle en $C_{1-4}$, (alcoxy en $C_{2-13}$)-carbonyle et alcoxy en $C_{1-16}$.

2. Ether polyglycidylique selon la revendication 1, dans lequel l'éther polyglycidylique multifonctionnel est une résine époxy Novolaque dans laquelle $3 \leq n \leq 4$.

3. Ether polyglycidylique selon la revendication 1 or 2, dans lequel $1{,}3 \leq n \leq 2$.

4. Ether polyglycidylique selon l'une quelconque des revendications 1 à 3, dans lequel le phénol monofonctionnel est le phénol substitué en position para par un substituant alkyle en $C_{4-12}$.

5. Procédé pour la préparation d'un éther polyglycidylique selon l'une quelconque des revendications 1 à 4, qui comprend la réaction de l'éther polyglycidylique multifonctionnel avec le phénol monofonctionnel à une température comprise dans l'intervalle allant de 120 à 180°C en présence d'un catalyseur acide ou basique.

6. Procédé pour la préparation d'un adhésif durcissable pouvant être dilé dans l'eau pour des revêtements, qui comprend la réaction d'un éther polyglycidylique selon l'une quelconque des revendications 1 à 4, en milieu aqueux avec un composé amino contenant en moyenne 2 atomes d'hydrogène des fonctions amines par molécule ou un sel de métal alcalin d'un amino-acide.

7. Procédé selon la revendication 6, dans lequel un éther glycidylique est inclus dans l'éther polyglycidylique.

8. Composition aqueuse de revêtement thermodurcissable comprenant un liant (A) préparé conformément à la revendication 6 ou 7 et un composé de réticulation (B) dans un rapport pondéral (A:B) allant de 95:5 à 65:35, le composé (B) ayant été combiné avec l'adhésif (A) avant ou après sa neutralisation.

9. Procédé pour la préparation d'un adhésif durcissable pouvant être dilué dans l'eau pour les revêtements, qui comprend la réaction conjointe en milieu aqueux, de l'éther polyglycidylique selon l'une quelconque des revendications 1 à 4, d'un éther glycidylique ayant une masse molaire d'époxy comprise dans l'intervalle allant de 300 g à 1500 g et d'un composé amino contenant en moyenne deux atomes d'hydrogène des fonctions amines par molécule, le rapport pondéral de l'éther polyglycidylique à l'éther glycidylique étant compris dans l'intervalle allant de 75:25 à 45:55 et le composé amino étant inclus en une quantité suffisante pour fournir de 1 à 1,5 atomes d'hydrogène des fonctions amines par groupe époxy des éthers polyglycidyliques et diglycidyliques.

10. Procédé selon la revendication 9, dans lequel l'éther diglycidylique a une masse molaire d'époxy comprise dans l'intervalle allant de 400 g à 1100 g.

11. Composition aqueuse de revêtement thermodurcissable comprenant un liant (C) préparé conformément à la revendication 9 ou 10 et un composé de réticulation (B) dans un rapport pondéral (C:B) compris dans l'intervalle allant de 95:5 à 65:35, le composé (B) ayant été combiné avec l'adhésif (C) avant ou après sa neutralisation.

12. Procédé pour la préparation d'un adhésif durcissable pouvant être dilué dans l'eau, comprenant le groupe carboxyle, pratiquement exempt d'époxy, pour des revêtements qui comprend la réaction conjointe en présence d'un catalyseur d'estérification d'un éther polyglycidylique selon l'une quelconque des revendications 1 à 4 et d'un acide dicarboxylique.

13. Procédé selon la revendication 12, dans lequel l'acide dicarboxylique possède une solubilité dans l'eau inférieure à 0,3 g/100 g d'eau à 20°C.

14. Procédé selon la revendication 12 ou 13, dans lequel on fait réagir l'acide dicarboxylique avec un mélange de l'éther polyglycidylique et d'un éther diglycidylique ayant une masse molaire d'époxy comprise dans l'intervalle allant de 170 g à 1500 g.

15. Procédé selon l'une quelconque des revendications 12 à 14, dans lequel l'adhésif durcissable pouvant être dilué dans l'eau possède une teneur de phénol monofonctionnel incorporé comprise dans l'intervalle allant de 10 à 25% en poids.

16. Composition aqueuse de revêtement thermodurcissable comprenant un liant (D) préparé selon l'une quelconque des revendications 12 à 15, et un composé de réticulation (B) dans un rapport pondéral (D:B) compris dans l'intervalle allant de 95:5 à 60:40, le composé (B) ayant été combiné avec le liant (D) avant ou aprè sa neutralisation.